# FASCICULE DE BREVET EUROPEEN

(11) **EP 0 916 034 B1**
(45) Date de publication et mention de la délivrance du brevet: **17.07.2002**
(21) Numéro de dépôt: 98928378.3
(22) Date de dépôt: 28.05.1998
(51) Int. Cl.: F16D 13/71

(54) **LIAISON VOLANT-COUVERCLE D'UN EMBRAYAGE A FRICTION**
VERBINDUNG ZWISCHEN DER DRUCKPLATTE UND DEM DECKEL EINER REIBUNGSKUPPLUNG
FRICTION CLUTCH FLYWHEEL-COVER LINKAGE

(30) Priorité: 30.05.1997 FR 9706687
(43) Date de publication de la demande: 19.05.1999
(73) Titulaire: VALEO, 75017 Paris (FR)
(72) Inventeur: DEQUESNES, Laurent, F-80800 Fouilloy (FR)
(74) Mandataire: Gamonal, Didier
(86) Numéro de dépôt international: FR9801071
(87) Numéro de publication internationale: WO9854481

(56) Documents cités:
- FR-A- 2 753 758
- GB-A- 1 435 908
- GB-A- 2 056 591
- GB-A- 2 197 920
- US-A- 2 195 663

## Description

La présente invention concerne les embrayages à friction pour véhicules automobiles à moteur à combustion interne. La présente invention concerne plus particulièrement les embrayages à friction comportant un volant amortisseur doté d'un plateau de réaction, au moins un disque de friction doté à sa périphérie externe de garnitures de friction et un mécanisme d'embrayage doté, d'une part, d'un couvercle pour fixation du mécanisme d'embrayage sur le volant amortisseur, et, d'autre part, d'un plateau de pression pour serrage des garnitures de friction entre les plateaux de pression et de réaction. Le plateau de pression est soumis à l'action de moyens élastiques de serrage d'action axiale. Un tel embrayage est décrit par exemple dans le document SAE 950893 de mars 1995. Ainsi qu'on le sait un volant amortisseur comporte deux masses coaxiales montées mobiles d'une par rapport à l'autre à l'encontre de moyens élastiques intervenant entre les deux masses, ainsi qu'usuellement des moyens élastiques de frottement intervenant axialement entre les deux masses.

L'une des masses, dite première masse, est destinée à être calée en rotation sur un premier arbre, tandis que l'autre masse, dite seconde masse, comporte un plateau de réaction dont la face dorsale constitue une face de friction pour les garnitures de friction du disque de friction présentant usuellement à sa périphérie interne un moyeu cannelé intérieurement pour sa liaison en rotation avec un deuxième arbre. Plus précisément les garnitures de friction s'étendent de part et d'autre d'un disque de support accouplé le plus souvent de manière rigide au moyeu car c'est le volant amortisseur qui dans ce cas est chargé de filtrer les vibrations transmises du premier arbre au second arbre. Les garnitures de friction sont portées à fixation par le disque de support avec intervention de moyens élastiques à action axiale pour serrage progressif des garnitures de friction entre les plateaux de pression et de réaction afin, notamment, d'améliorer le confort des passagers du véhicule.

S'agissant d'une application pour véhicules automobiles le premier arbre est un arbre menant, à savoir le vilebrequin du moteur à combustion interne du véhicule, tandis que le second arbre est un arbre mené à savoir l'arbre d'entrée de la boîte de vitesses. Ainsi qu'on le sait le moteur du véhicule ne "tourne jamais rond" (pas régulièrement) à cause des explosions et des pistons. Le moteur excite donc le volant amortisseur qui présente une fréquence de résonance.

Pour mémoire, on rappellera que la seconde masse est montée rotative sur la première masse à l'aide de moyens de palier, tel qu'un roulement à billes intervenant radialement entre les deux masses comme visible dans le document SAE précité, auquel on pourra se reporter pour plus de précisions.

Dans ce document les organes élastiques sont à action radiale en étant montés chacun dans une cassette montée à articulation par exemple à sa périphérie externe sur le première masse et à sa périphérie interne sur la seconde masse. Un ou plusieurs organes élastiques sont montés par cassette et travaillent en compression.

En variante les organes élastiques, par exemple des ressorts à boudin de grande longueur, agissent circonférentiellement, la seconde masse portant à solidarisation un disque avec des pattes radiales offrant un appui aux extrémités circonférentielles des ressorts également en appui sur les saillies portées en vis-à-vis par la première masse et par un flasque solidaire de la première masse, les pattes du disque étant intercalées axialement entre les saillies. La première masse porte alors un rebord annulaire d'orientation axiales à sa périphérie externe pour retenir radialement les ressorts et pour fixer en haut ledit flasque.

Le mécanisme d'embrayage comporte classiquement un couvercle de forme creuse avec un fond, un plateau de pression, des languettes élastiques à action circonférentielle pour lier en rotation le plateau de pression au couvercle avec mouvement axial, des moyens élastiques de serrage prenant appui sur le fond du couvercle, troué centralement, pour solliciter le plateau de pression en direction opposée au fond du couvercle afin de serrer les garnitures de friction entre les plateaux de pression et de réaction et enfin des moyens débrayeurs pour contrecarrer à volonté l'action de moyens élastiques de serrage appelés également moyens embrayeurs.

Les moyens débrayeurs peuvent consister en des leviers de débrayage et les moyens élastiques de serrage en des ressorts à boudin.

Le plus souvent les moyens de serrage forment la partie périphérique d'un diaphragme de forme tronconique à l'état libre. Cette partie périphérique est prolongée radialement vers l'intérieur par une partie centrale fragmentée en doigts radiaux par des fentes. Ces doigts constituent les moyens débrayeurs de l'embrayage.

Dans tous les cas l'embrayage est normalement engagé, les garnitures de friction étant serrées entre les plateaux de pression et de réaction sous l'action des moyens élastiques de serrage. Pour libérer les garnitures de friction et donc débrayer l'embrayage, il faut à l'aide d'un butée de débrayage agir sur l'extrémité interne des moyens débrayeurs pour contrecarrer l'action de moyens élastiques de serrage. Par exemple il faut agir en poussant ou en tirant sur l'extrémité interne du diaphragme troué centralement pour faire pivoter le diaphragme, les languettes élastiques usuellement d'orientation tangentielle rappelant alors le plateau de pression en direction du fond du couvercle.

Suivant le type d'embrayage la butée de débrayage agit donc en tirant ou en poussant sur l'extrémité interne des doigts du diaphragme pour débrayer l'embrayage.

Ainsi la deuxième masse du volant amortisseur est reliée de manière débrayable au second arbre.

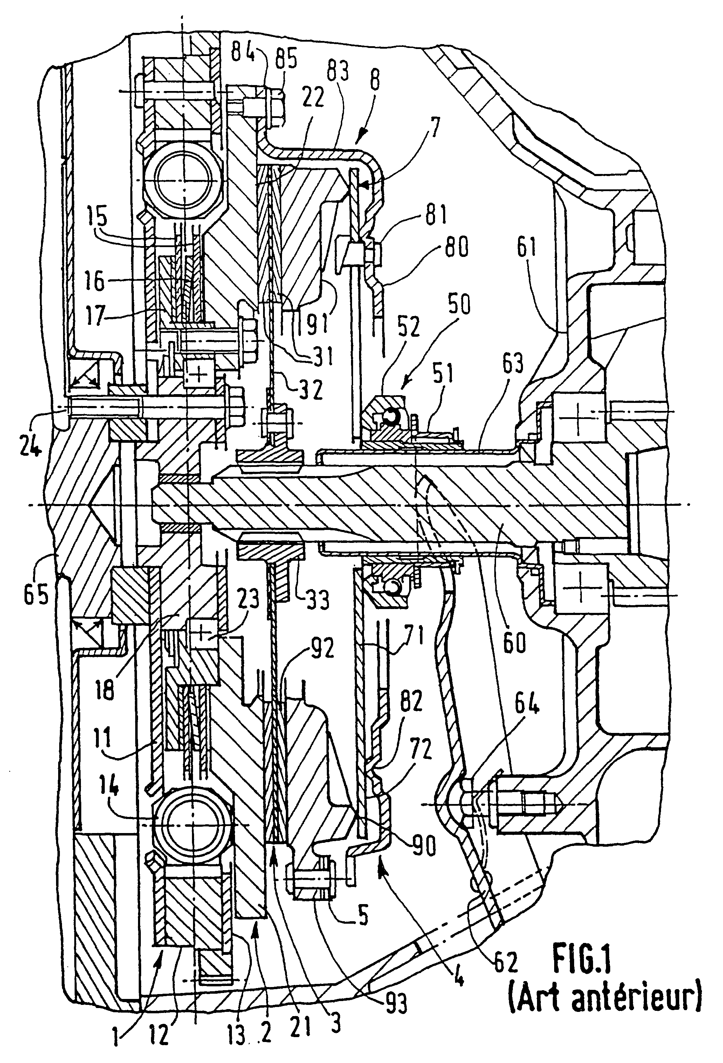

Bien entendu le volant amortisseur peut être également doté d'un limiteur de couple comme visible à la figure 1.

Dans cette figure on voit en 1 la première masse, en 2 la seconde masse, en 3 le disque de friction du type rigide, en 4 le mécanisme d'embrayage, en 50 la butée de débrayage montée coulissante sur un tube guide 63 solidaire du carter de la boîte de vitesse 61, dont on voit en 60 l'arbre d'entrée constituant l'arbre mené de l'embrayage.

La butée de débrayage 50 comporte un élément de manoeuvre 51 comportant un manchon monté coulissant sur le tube guide 63 traversé par l'arbre d'entrée 60. L'élément de manoeuvre 51 porte un élément d'attaque 52 en forme de roulement à billes, dont la bague extérieure est ici tournante et profilée pour contact permanent avec l'extrémité interne des doigts 71 du diaphragme 7, dont on voit en 72 la partie périphérique en forme de rondelle Belleville constituant les moyens élastiques de serrage à action axiale. L'élément de manoeuvre 51 est soumis à l'action d'une fourchette de débrayage 62 relié par une transmission à câble à la pédale de débrayage. En variante la butée de débrayage 50 peut constituer le récepteur d'une commande hydraulique reliée par une canalisation à un émetteur hydraulique actionné par la pédale de débrayage. Ici la fourchette de débrayage 62 est montée pivotant sur une rotule 64 portée par le carter 61 et l'embrayage est du type poussé, le diaphragme 7, de forme annulaire étant monté de manière pivotante sur le fond 80 troué centralement du couvercle 8 en forme d'assiette creuse.

Le fond 80 est globalement d'orientation transversale. Le montage pivotant du diaphragme est ici réalisé à l'aide de colonnettes 81 à tête profilée pour contact avec la face externe de la périphérie interne de la rondelle Belleville 72. L'autre face de cette périphérie interne est en contact d'un embouti 82 formé dans le fond 80 du couvercle 8 en tôle emboutie. La tête des colonnettes 81 forme un appui secondaire pour le diaphragme 7 en regard d'un appui primaire constitué par l'embouti 82. A sa périphérie externe la rondelle Belleville 72 du diaphragme s'appuie sur un bossage annulaire fractionné 90, issu de la face dorsale 91 du plateau de pression 9. Ce bossage 90 fait saillie axialement par rapport à ladite face 91 et ce en direction du fond 80. La face frontale 92 du plateau de pression 9 forme une face de friction en regard de la face dorsale 22 d'un plateau de réaction 21 de la deuxième masse. Cette face dorsale 22 forme également une face de friction en sorte que les garnitures de friction 31, que présente le disque de friction 3 à sa périphérie externe, sont serrées sous l'action du diaphragme 7 entre les dites faces 92, 22.

Ces garnitures 31 sont solidaires d'un disque de support 32, lui même solidaire d'un moyeu 33 cannelé intérieurement pour sa liaison en rotation avec l'arbre d'entrée 60, dot l'extrémité libre est cannelée de manière complémentaire.

Les languettes axialement élastiques 5 et à action circonférentielle interviennent entre le couvercle 8 et des pattes de fixation 93 que présente le plateau de pression 9 à sa périphérie externe. On notera que la première masse 1 comporte un voile 11 portant à sa périphérie externe une couronne annulaire 12 d'orientation axiale en bout de laquelle est fixé un flasque 13 dirigé radialement vers l'intérieur. Des rivets (dont un est visible dans la partie haute de la figure 1) assemblent le rebord 12 et le flasque 13 ou voile 11. Des organes élastiques 14, ici des ressorts à boudin, sont logés dans les fenêtres (non référencées) ménagées en vis-à-vis dans le voile 11 et le flasque 13. La couronne 12 porte la couronne de démarreur du véhicule et retient extérieurement les ressorts 14. Ici deux disques 15 sont prévus. Ces disques présentent à leur périphérie externe des pattes radiales munies de doigts circonférentiels sur chacune de leur face latérale pour contact avec des socles d'appui des extrémités des ressorts. Pour plus de précisions on se reportera au document FR-A-2 593 252 (US-A-4 747 801), qui décrit le fonctionnement de ce volant amortisseur et qui montre les socles d'appui des ressorts 14. Les disques 15 sont portés par un moyeu 17 appartenant à la deuxième masse 2. Ce moyeu 17 porte un flasque d'orientation transversale parallèle à la partie principale, en forme de plateau de réaction 21, de la deuxième masse. Les disques 15 sont revêtus ici de garnitures de friction (non référencées) pour frotter respectivement sur la face frontale du plateau de réaction 21 et sur le flasque du moyeu. Une rondelle Belleville 16 agit entre les deux disques 15 pour solliciter axialement les disques 15 respectivement en direction de la face frontale du plateau de réaction 21 et du flasque du moyeu 17 pour serrer les garnitures de friction. Il est ainsi formé un limiteur de couple.

Par ailleurs la première masse comporte un moyeu central 18 pour montage d'un roulement à billes 23 intervenant radialement entre la périphérie externe du moyeu central 18 et la périphérie interne du moyeu 17.

La bague extérieure du roulement 23 est calée axialement par le plateau de réaction 21 et par un épaulement que présente l'alésage interne du moyeu 17.

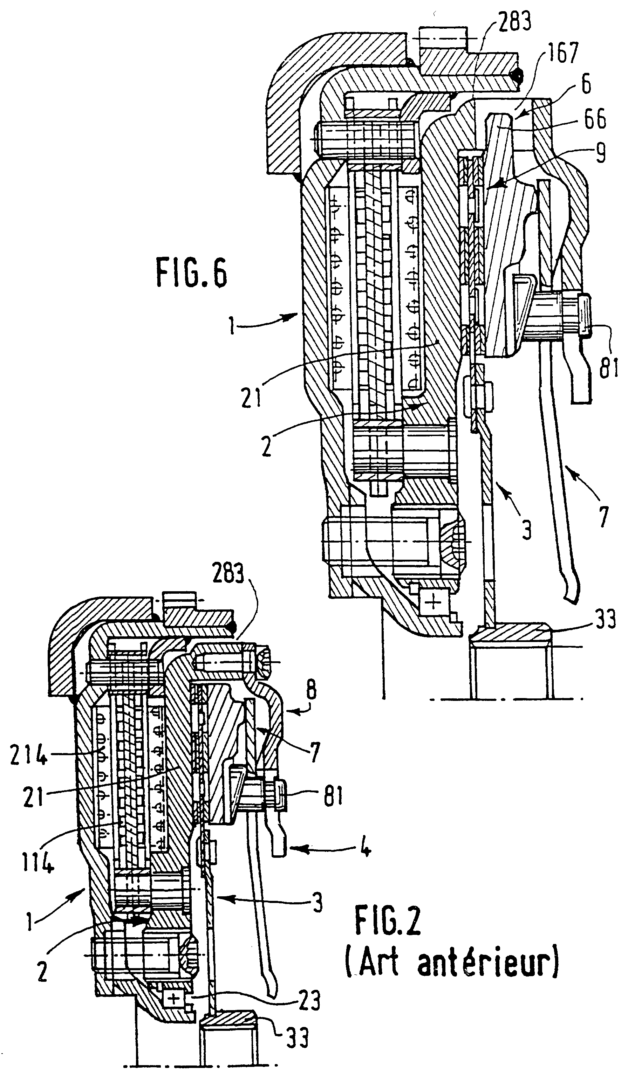

La bague intérieure du roulement 23 est calée axialement par le moyeu central 18, épaulé à cet effet, et par une rondelle (non référencée) servant d'appui aux vis de fixation 24 de la première masse au vilebrequin 65, constituant l'arbre menant. En outre le couvercle 8 présente ici une jupe annulaire 83, d'orientation axiale, s'étendant à la périphérie externe du fond 80. Cette jupe 83 raccorde le fond 80, dirigé radialement vers l'intérieur, à un rebord de fixation 84 dirigé radialement vers l'extérieur. Ce rebord 84 se raccorde à l'extrémité libre de la jupe 83 et présente des trous pour le passage de vis de fixation 85 se vissant dans le plateau de réaction. Ainsi normalement le couple est transmis de l'arbre menant 65 à l'arbre mené 60 via les ressorts 14, les disques 15, le plateau de réaction 21 et le disque de friction 3 dont les garnitures de friction 31 sont serrées entre les faces de frictions 22, 92 des plateaux 21, 9. A l'aide de la pédale de débrayage on fait pivoter la fourchette de débrayage 62, qui alors déplace la butée de débrayage 50 vers la gauche en direction du disque de friction 3. Le diaphragme 7 prend alors appui sur son appui secondaire 81 et bascule. Le plateau de pression 9, sous l'action des languettes 5 recule vers le fond 80 du couvercle 8 afin de libérer les garnitures de friction 31. Le disque de friction 3 est alors débrayé et l'embrayage désengagé. Dans cette réalisation les pattes 93 s'étendent à la périphérie externe du plateau de pression 9 et la jupe 83 du couvercle entoure le plateau de pression 9 et les garnitures de friction 31. En variante le couvercle 8 est moins profond (figure 2) et le plateau de réaction 21 présente à sa périphérie externe une jupe 283 entourant les garnitures de friction 32. Dans cette figure 2 les organes élastiques 114 sont montés dans des cassettes 214 montées à articulation respectivement à leur périphérie externe sur la première masse et à leur périphérie interne sur la deuxième masse. Pour plus de précisions on se reportera au document SAE précité dont le contenu est considéré comme annexé à la présente invention. Dans ce document on voit que les languettes élastiques peuvent être fixées, par exemple par rivetage, chacune respectivement à la périphérie interne du plateau de pression 9 et à la périphérie externe du couvercle 8. Ces languettes sont inclinées et sont à action circonférentielle.

Quoi qu'il en soit il se pose un problème de résistance mécanique des languettes élastiques à action circonférentielle.

En effet avec ce type de volant amortisseur, appelé également double volant amortisseur, on choisit les inerties des masses et les raideurs des organes élastiques de façon à placer la fréquence de résonance du volant amortisseur en dessous de la fréquence d'excitation fournie par le moteur du véhicule au régime de ralenti.

Ainsi au démarrage et à l'arrêt du moteur du véhicule on passe par la fréquence de résonance du volant amortisseur excité par l'arbre menant. Il en résulte que les languettes élastiques sont fortement sollicitées contrairement à ce qui se passe dans un embrayage classique. Ainsi les languettes élastiques peuvent être déformées de manière permanente.

La présente invention a pour objet de remédier à cette inconvénient de manière simple et économique.

Suivant l'invention un embrayage à friction du type sus-indiqué, dans lequel l'un des éléments plateau de réaction-couvercle présente à sa périphérie externe une jupe annulaire globalement d'orientation axiale entourant le plateau de pression, est caractérisé en ce qu'une liaison du type tenon mortaise intervient à jeu circonférentiel et à jeu axial entre la dite jupe et le plateau de pression, en ce que le jeu axial est choisi pour autoriser un déplacement axial du plateau de pression par rapport au couvercle, tandis que le jeu circonférentiel est absorbé lorsque le volant amortisseur passe par sa fréquence de résonance en sorte que ladite liaison se substitue alors à celle des languettes élastiques pour lier en rotation le plateau de pression au couvercle.

Grâce à l'invention les languettes sont ménagées lorsque l'on passe par la fréquence de résonance du volant amortisseur. Cette fréquence étant placée en deçà de la fréquence d'excitation fournie par le moteur au régime de ralenti, après démarrage du véhicule les languettes élastiques se comportent comme des languettes classiques.

Avantageusement pour un fonctionnement plus sûr, la liaison comporte plusieurs jeux de tenon et de mortaise répartis régulièrement circonférentiellement.

Ces jeux alternent circonférentiellement avec les jeux de languettes élastiques.

Avantageusement chaque tenon est issu du plateau de pression ce qui permet de bien ventiler l'embrayage du fait que les mortaises sont formées dans la jupe.

Bien entendu on peut inverser les structures.

Les languettes élastiques peuvent être d'orientation tangentielle ou inclinée. Dans tous les cas elles ont une action circonférentielle et sont ménagées grâce à la liaison supplémentaire selon l'invention.

Cette liaison est peu coûteuse.

La description qui va suivre illustre l'invention en regard des dessins annexés dans lesquels :
- la figure 1 est une en coupe axiale d'un embrayage à friction de l'art antérieur ;
- la figure 2 est une deuxième vue en coupe axiale simplifiée d'un embrayage à friction de l'art antérieur pour un second exemple de réalisation ;
- la figure 3 est une vue partielle de face d'un mécanisme d'embrayage selon l'invention ;
- la figure 4 est une vue en coupe selon la flèche 4 de la figure 3 avec arrachement local pour montrer la liaison tenon-mortaise selon l'invention.
- la figure 5 est une vue selon la flèche 5 de la figure 3 ;
- la figure 6 est une vue analogue à la figure 3 pour un second exemple de réalisation selon l'invention.
- La figure 7 est une vue partielle d'un mécanisme d'embrayage sans son diaphragme vue de l'arrière, avec une coupe axiale du couvercle d'embrayage pour monter un tenon et une mortaise pour un troisième exemple de réalisation de l'invention ;
- la figure 8 est une vue de dessus de la figure 7 avec enlèvement du pont.

Dans toutes les figures les éléments communs seront affectés des mêmes signes de référence.

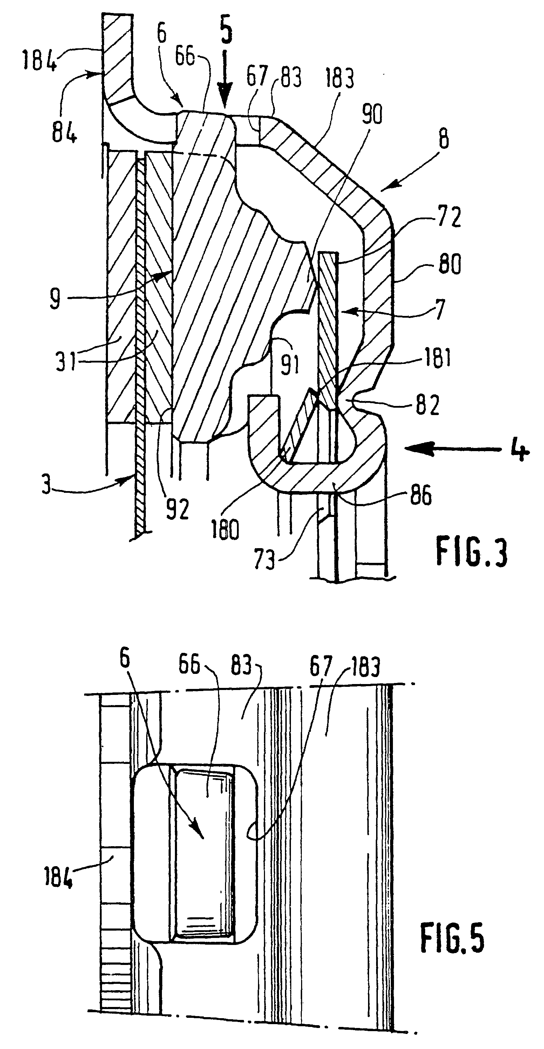

Ainsi le mécanisme d'embrayage 4 des figures 3 à 5 est destinée, dans le cadre d'une application pour véhicule automobile, à se monter à la place du mécanisme d'embrayage 4 de la figure 1 sans modification du volant amortisseur et du disque de friction 3. Le plateau de réaction 21 de la figure 1 n'est donc pas modifié.

Ainsi le mécanisme d'embrayage 4 forme un ensemble unitaire et comporte trois pièces de forme annulaire à savoir un couvercle creux 8 à fond 80 troué centralement, un diaphragme 7 prenant appui sur le fond 80 et un plateau de pression 9. Des languettes axialement élastiques 5 et à action circonférentielle assurent une liaison en rotation entre le plateau de pression 9 et le couvercle 8. Les languettes 5 autorisent un déplacement axial du plateau de pression 9 vis-à-vis du couvercle 8. Les languettes 5 sont ici tangentielles.

Ce plateau de pression 9 présente frontalement une face de friction 92 pour la garniture de friction 31 adjacente du disque de friction 3.

La face dorsale 91 du plateau 9 porte en saillie axiale un bossage 90 annulaire fractionné 91 dirigé vers le fond 80. Ce bossage 90 a un sommet pointu pour appui local de la périphérie externe de la rondelle Belleville 72 du diaphragme 7. La périphérie interne de la rondelle Belleville 72 s'appuie sur un appui primaire 82 formé par emboutissage dans le fond 80 du couvercle 8.

En variante l'appui primaire 82 consiste en un jonc. En regard de l'appui primaire 82 il est prévu un appui secondaire 181. Le diaphragme 7 est intercalé entre les appuis 82, 181 pour son montage pivotant sur le couvercle.

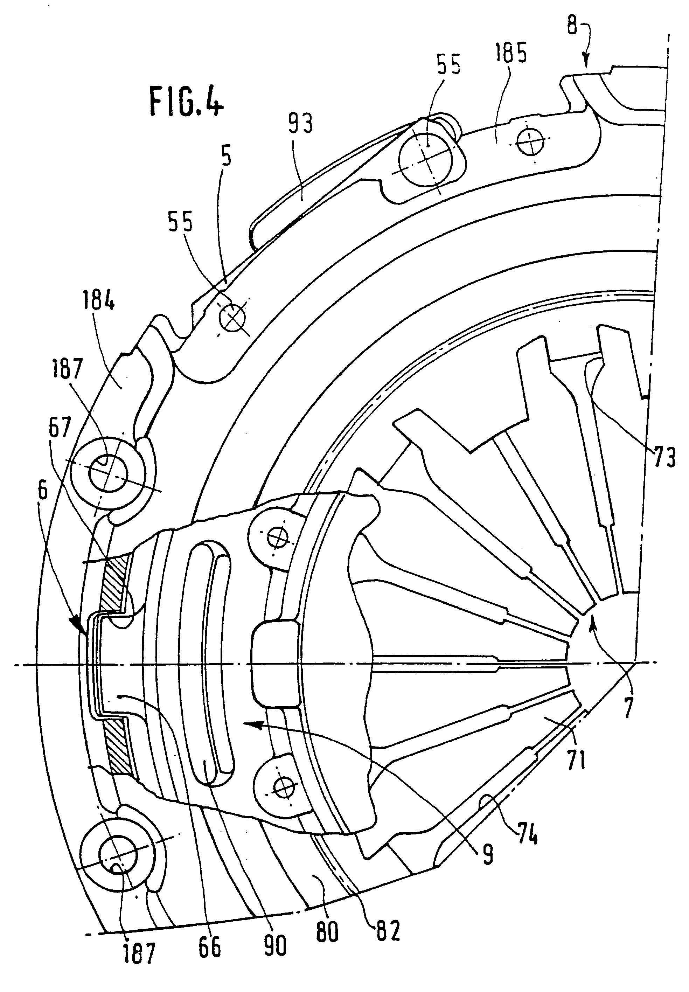

Ici l'appui secondaire est formé par un arrondi 181 que présente à sa périphérie externe une couronne jonc 180. Cette couronne jonc 180 est portée par des pattes 86 issues par découpe et pliage du fond 80 du couvercle 8. Les pattes 86, d'orientation axiale, traversent le diaphragme 7 grâce a des orifices élargis 73 implantés à la périphérie interne de la rondelle Belleville 72 du diaphragme 7 (figure 4).

Ces orifices 73 forment les extrémités externes des fentes 74 séparant les doigts 71 du diaphragme appartenant à la partie centrale de celui-ci. Les fentes 74 débouchent intérieurement dans l'ouverture centrale du diaphragme 7 de forme tronconique à l'état libre. On notera que les fentes 74 ont intérieurement une largeur réduite pour augmentation de la surface d'appui de la butée de débrayage usuellement en contact permanent avec le diaphragme.

Les pattes 86 sont repliées radialement vers l'extérieur pour former un coude de calage axial pour la couronne jonc 180 centrée intérieurement par lesdites pattes.

Bien entendu on peut utiliser d'autres moyens pour monter de manière basculante le diaphragme 7 sur le couvercle, tel que les colonnettes des figures 1 et 2. Ici trois jeux de languettes axialement élastiques 5 sont prévus. Les jeux de languettes 5 sont répartis régulièrement les uns par rapport aux autres. Chaque jeu comprend au moins une languette, plusieurs languettes superposées pouvant être prévues par jeu. Tout cela dépend des applications. Il en est de même du nombre de jeux de languettes.

Ces languettes élastiques 5 sont fixées à l'aide d'organes de fixation, ici des rivets 55 en variante des vis, des boulons ou autres, à chacune de leurs extrémités respectivement à une patte 93 du plateau de pression 9 et à une plage 185 du couvercle 8.

La patte 93 s'étend en saillie radiale vers l'extérieur et ce à la périphérie externe du plateau de pression. La patte 93 est ici circonférentiellement longue. Bien entendu la patte 93 peut être circonférentiellement plus courte. La plage 185 appartient au rebord radial 84 de fixation du couvercle 8. Ce rebord 84, dirigé radialement sur l'extérieur, s'étend à l'extrémité libre de la jupe 83 du couvercle entourant le plateau de pression 9. La jupe 83 est annulaire et d'orientation axiale. Elle se raccorde ici à une portion tronconique 183, elle même raccordé au fond 80, d'orientation transversale, dirigé radialement vers l'intérieur.

Le rebord 84 présente des plages de fixation 184 adjacentes au plateau de réaction 21 de la figure 1. Ces plages 184 alternant circonférentiellement avec les plages 185 décalées axialement par rapport aux plages 184 pour autoriser le passage des pattes 93 et, de manière connue, former un auvent.

Le couvercle 8 est ci en tôle emboutie, tandis que le plateau de pression 9 est en matière moulable, ici en fonte. Le couvercle 8 est excité par le moteur du véhicule via le volant amortisseur entraîné par ledit moteur. Suivant l'invention une liaison 6 du type tenon-mortaise intervient ici entre la jupe annulaire 83 du couvercle 8 et le plateau de pression 9.

Cette liaison 6 fait appel ici à au moins un tenon 66 issu du plateau de pression 9 et à une mortaise 67 appartenant à la jupe 83.

Plus précisément dans les figures 3 à 5 il y a autant de jeux de tenon 66 et mortaise 67 qu'il y a de jeux de languettes 5, ici d'orientation tangentielle.

Les jeux de tenons 66 et mortaise 67 sont décalés circonférentiellement par rapport aux jeux de languettes 5.

Comme mieux visible à la figure 4 chaque plage de fixation 184 comporte ici deux trous 187 pour passage des vis de fixation 85 de la figure 1.

La liaison 6 du type tenon-mortaise intervient centralement entre les deux trous 187, et alterne circonférentiellement avec les languettes 5.

Chaque tenon 66, qui a ici une forme globalement rectangulaire, s'étend en saillie radiale vers l'extérieur à la périphérie externe du plateau de pression 9 en étant venu de moulage avec ledit plateau. Chaque tenon 66 est plus court circonférentiellement qu'une patte 93 du plateau de pression 9. Grâce aux pattes 93 on peut équilibrer le mécanisme 4 à l'aide de perçages borgnes réalisés dans les pattes 93.

La mortaise 67 affecte en partie la périphérie interne de la plage de fixation 184 pour faciliter le montage par enfilage axial du plateau de pression 9 avant fixation des languettes 5 et éviter toute interférence avec la plage 184.

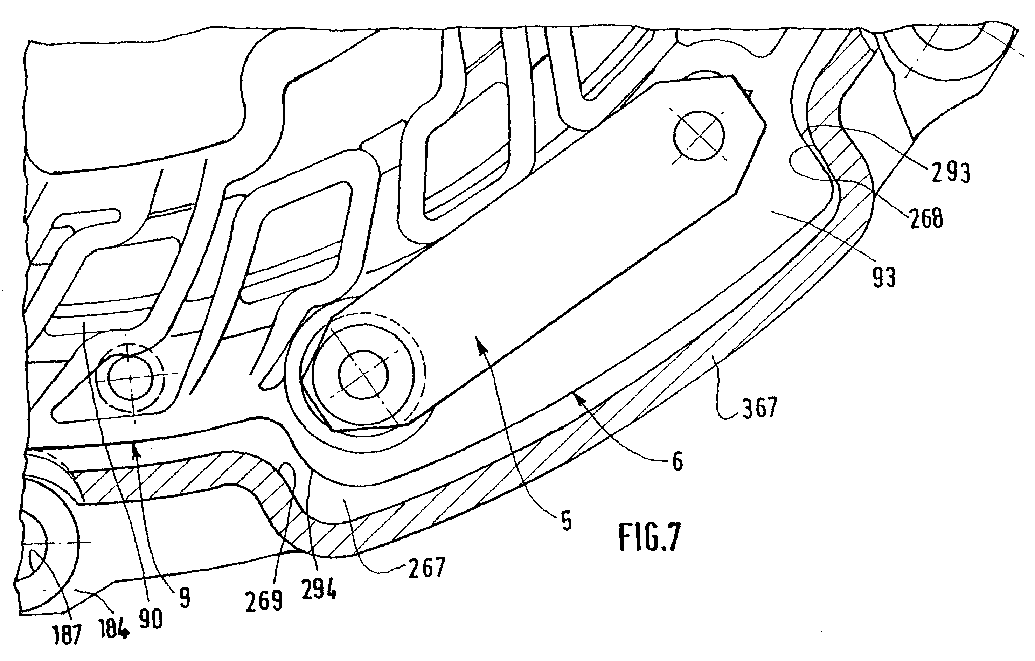

Vu de dessus (figure 5) la mortaise a une forme rectangulaire. Bien entendu on peut monter en biais le plateau de pression 9 avant fixation des languettes 5 au couvercle en sorte que la mortaise n'affecte pas forcément la plage de fixation 184. Les tenons 66 ont en section une forme globalement rectangulaire (figure 3).

Chaque tenon 66 est monté dans sa mortaise 67 avec un jeu axial supérieur au jeu circonférentiel (figure 5). Le jeu axial est choisi pour autoriser un déplacement axial du plateau de pression 9 par rapport au couvercle 8 lorsque le mécanisme unitaire d'embrayage 4 est monté sur le plateau de réaction 21 de la figure 1.

Le jeu circonférentiel est supérieur au jeu de montage usuel. Ce jeu dépend des applications, notamment de l'inertie du plateau de pression.

Ce jeu est tel qu'il y ait une liaison en rotation entre le plateau de pression 9 et le couvercle lorsque le volant amortisseur passe par sa fréquence de résonance, c'est à dire ici lorsque l'on démarre (ou lance) le moteur du véhicule et lorsque l'on arête celui-ci. Pour cette fréquence de résonance les tenons 66 et les mortaises 67 se substituent aux languettes 5 pour assurer la liaison en rotation du couvercle 8 avec le plateau de pression 9. Les languettes sont ainsi ménagées et ne risquent pas d'être détériorées. Bien entendu on peut inverser les structures. Ainsi, par emboutissage, la jupe 83 du couvercle peut présenter des tenons dirigés radialement vers l'intérieur et engagés chacun dans une mortaise du plateau de pression. La mortaise consiste alors dans une échancrure ouverte vers l'extérieur et réalisée à la périphérie externe du plateau de pression 9. Cette solution est néanmoins moins favorable que celle des figures 3 à 5 car elle conduit à une mauvaise ventilation du mécanisme d'embrayage 4.

Bien entendu (figure 6) lorsque la jupe 283 annulaire est issue du plateau de réaction 21 et entoure le plateau de pression 9, les mortaises 167 sont formées alors dans cette jupe 283, d'orientation axiale, et consistent en des ouvertures borgnes fermées par les plages 184 du couvercle 8, alors moins profond. En variante ce couvercle 8 peut être plat. Le jeu axial est supérieur au jeu circonférentiel comme dans les figures 3 à 5 et en passant par la fréquence de résonance du volant amortisseur, pour un régime moteur inférieur au régime de ralenti, les tenons 66 du plateau de pression 9, de même forme que ceux des figures 3 à 5, viennent en prise avec les languettes 5 et se substituent celles-ci.

Bien entendu le mécanisme d'embrayage peut être équipé d'un dispositif de rattrapage d'usure, les moyens élastiques de serrage et les moyens débrayeurs peuvent avoir une autre configuration. Pour plus de précisions on se reportera par exemple au document FR-9704214 déposé le 7 avril 1997.

Ainsi les moyens de serrage peuvent comporter deux rondelles Belleville montées en série. Les moyens débrayeurs peuvent intervenir entre les deux rondelles Belleville et comporter un manchon avec un flasque transversal intercalé entre les deux rondelles Belleville.

L'une des rondelles Belleville peut appartenir à un diaphragme. L'embrayage peut être également du type tiré comme mentionné dans ce document.

En variante dans les figures 3 à 6 le diaphragme peut s'appuyer à la périphérie externe de sa rondelle Belleville sur le couvercle et à la périphérie interne de sa rondelle Belleville sur le plateau de pression. Dans ce cas la butée de débrayage agit en tirant sur les doigts du diaphragme pour désengager l'embrayage du type tiré.

L'appui primaire 82 peut consister en un jonc. Les languettes élastiques peuvent être inclinées et agir entre la périphérie interne du plateau de pression et la périphérie externe du couvercle comme visible à la page 108 du document SAE précité.

Grâce à leur inclinaison les languettes ont une composante circonférentielle et sont donc à action circonférentielle.

La liaison du type tenon-mortaise ménage les languettes.

Ces languettes peuvent intervenir entre la périphérie externe du plateau de pression et les colonnettes 81 conformées pour former un rivet de fixation des languettes. Ainsi qu'on l'aura compris le volant amortisseur est excité par le moteur du véhicule et sa fréquence de résonance est inférieure à la fréquence d'excitation fournie par le moteur au régime de ralenti.

Le jeu circonférentiel entre les tenons et les mortaises dépend des applications et notamment de l'inertie du plateau de pression 9. Le jeu circonférentiel est tel qu'il évite une déformation plastique des languettes lorsque l'on passe par la fréquence de résonance du volant amortisseur.

Au delà du régime de ralenti le jeu circonférentiel est tel qu'il ne perturbe pas le fonctionnement des languettes 5.

Bien entendu l'embrayage peut être multidisque et comporte plusieurs disques de friction et plusieurs plateaux de pression.

Dans une variante mon représentée les mortaises peuvent être réalisées dans la jupe 283 du plateau de réaction 21 et la jupe du couvercle 8, le couvercle ayant une profondeur intermédiaire entre celle des figures 3 et 6, la jupe 283 du plateau de réaction 21 étant alors axialement plus courte.

La mortaise est donc en deux parties chacune en coïncidence axiale l'une avec l'autre.

Bien entendu, les pattes 93 peuvent former directement les tenons.

Ainsi, on peut utiliser les auvents de la figure 4 pour former les mortaises.Pour mémoire, on rappellera que les plages 185 sont reliées aux plages 184 par deux bords latéraux d'orientation axiale. Le jeu circonférentiel selon l'invention intervient entre les bords latéraux et les extrémités circonférentielles des pattes ; les auvents étant alors plus courts circonférentiellement.

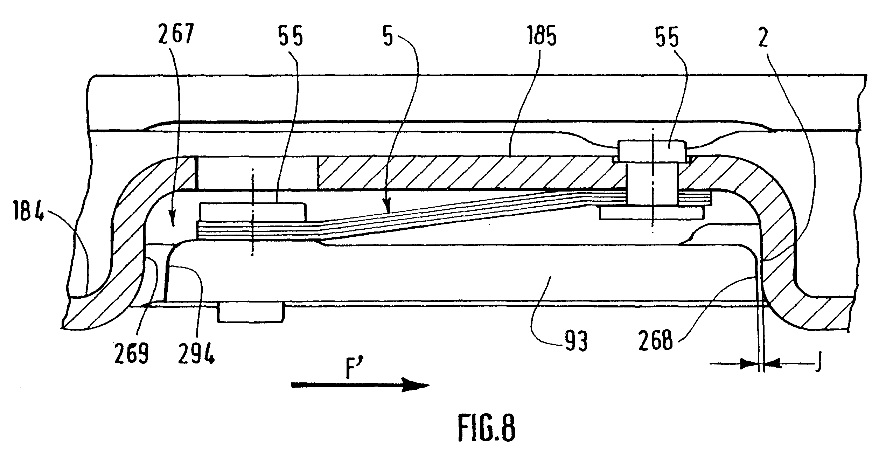

Plus précisément, ce jeu circonférentiel intervient (figure 8) entre le bord latéral 268 et l'extrémité circonférentielle 293 en vis à vis de la patte 93. Un jeu circonférentiel existe entre le bord latéral 269 et l'autre extrémité circonférentielle 294. C'est au niveau de cette extrémité 294 que se fixe par rivetage en 55 le jeu de languette 5, l'autre extrémité des languettes étant fixée par le rivet 55 à la plage 185. Le jeu J circonférentiel selon l'invention intervient entre l'extrémité circonférentielle 293, la plus éloignée de la fixation des languettes 5 à la patte 93 et le bord latéral en vis à vis 268 du couvercle 8.

Ainsi, on évite une déformation des languettes lorsque le volant amortisseur passe par la fréquence de résonance.

A la figure 8 on a représenté par la flèche F le mouvement du plateau de pression par rapport au couvercle conduisant à une déformation permanente des languettes 5 si le jeu J, selon l'invention, n'était pas prévu.

Dans l'autre sens, les languettes 5 travaillent en traction et ne risquent donc pas de se déformer. Il en est de même dans toutes les autres figures.

Comme visible à la figure 7, un pont 367 d'orientation axiale relie entre eux les deux rebords 268, 269. Ce pont 267 s'étend radialement au dessus de la patte 93 et se raccorde à la plage 185. Chaque mortaise 267 est donc délimité dans les figures 7 et 8 par les bords latéraux 268, 269, la plage 185 et le pont 367.

Le couvercle est ainsi solide à ce niveau et les languettes 5 sont protégées par le pont 367.

Comme visible à la figure un jeu axial existe entre la plage 185 et la patte 93 pour autoriser un déplacement axial du plateau de pression par rapport au couvercle.

Les jeux circonférentiels entre les extrémités circonférentielles des tenons et les bords latéraux délimitant les mortaises peuvent être égaux ou ne pas être égaux. Dans le sens opposé à une traction des languettes, ce jeu correspond à celui de l'invention pour que les trous et mortaises se substituent aux languettes 5.

On notera que dans les figures 7 et 8, le diaphragme a été enlevé pour mieux voir la plateau de pression. Dans ces figures 7 et 8 seul le couvercle est coupé.

On notera que les pattes 93 ont en section une forme globalement rectangulaire.

## Revendications

1. Embrayage à friction pour véhicule automobile à moteur à combustion interne comportant un volant amortisseur excité par le moteur du véhicule, présentant une fréquence de résonance en deçà du régime de ralenti dudit moteur et doté d'un plateau de réaction (21), au moins un disque de friction (3) doté à sa périphérie externe de garnitures de friction (31) et un mécanisme d'embrayage doté, d'une part, d'un couvercle (8) pour fixation du mécanisme d'embrayage sur le volant amortisseur et, d'autre part, d'un plateau de pression (9) soumis à l'action de moyens élastiques de serrage (7) pour serrage des garnitures de friction (31) entre les plateaux de pression (9) et de réaction (21), dans lequel l'un des éléments plateau de réaction (21) - couvercle (8) présente une jupe annulaire (83,283) globalement d'orientation axiale entourant le plateau de pression (9) et dans lequel des languettes axialement élastiques (5) et à action circonférentielle lient en rotation le plateau de pression (9) au couvercle (8) tout en autorisant un mouvement axial du plateau de pression (9) vis-à-vis du couvercle (8), **caractérisé en ce qu'**une liaison (6) du type tenon (66, 93) - mortaise (67, 167, 267) intervient à jeu circonférentiel et à jeu axial entre la jupe (83, 283) et le plateau de pression (9), **en ce que** le jeu axial est choisi pour autoriser un déplacement axial du plateau de pression (9) par rapport au couvercle (8), tandis que le jeu circonférentiel est choisi pour être annulé lorsque le volant amortisseur passe par sa fréquence de résonance en sorte que ladite liaison se substitue alors à celle des languettes élastiques pour lier en rotation le plateau de pression au couvercle.

2. Embrayage selon la revendication 1 **caractérisé en ce que** ladite liaison (6)comporte plusieurs jeux de tenon (66, 93) (66) et mortaise (67, 167, 267).

3. Embrayage selon la revendication 2 **caractérisé en ce que** plusieurs jeux de languettes élastiques (5) sont prévus, et **en ce que** les jeux de tenon (66) et mortaise (67, 167) alternent circonférentiellement avec les jeux de languettes élastiques (5).

4. Embrayage selon la revendication 1 à 3 **caractérisé en ce que** les tenons (66, 93) sont issus du plateau de pression (9).

5. Embrayage selon la revendication 4 **caractérisé en ce que** les tenons (66, 93) s'étendent en saillie radiale à la périphérie externe du plateau de pression (9).

6. Embrayage selon la revendication 5 **caractérisé en ce que** les tenons (66, 93) ont une forme globalement rectangulaire en section.

7. Embrayage selon la revendication 5 **caractérisé en ce que** les mortaises (62) sont formées dans la jupe (83) du couvercle (8).

8. Embrayage selon la revendication 7 **caractérisé en ce que** les mortaises ont une forme globalement rectangulaire.

9. Embrayage selon la revendication 5 **caractérisé en ce que** les mortaises sont formées dans la jupe (283) du plateau de réaction (21).

10. Embrayage selon la revendication 5 **caractérisé en ce que** les mortaises sont formées en coïncidence axiale dans le jupe (283) du plateau de réaction (21) et dans la jupe (83) du couvercle (8).

## Patentansprüche

1. Reibungskupplung für Kraftfahrzeuge mit Verbrennungsmotor, umfassend ein durch den Motor des Fahrzeugs erregtes Dämpfungsschwungrad, das eine Resonanzfrequenz diesseits der Leerlaufdrehzahl des Motors aufweist und mit einer Gegenanpreßplatte (21) versehen ist, wenigstens eine Reibungskupplungsscheibe (3), die an ihrem äußeren Umfang mit Reibbelägen (31) versehen ist, und einen Kupplungsmechanismus, der einerseits mit einem Deckel (8) für die Befestigung des Kupplungsmechanismus am Dämpfungsschwungrad und andererseits mit einer Druckplatte (9) versehen ist, die der Einwirkung von elastischen Einspannmitteln (7) zum Einspannen der Reibbeläge (31) zwischen der Druckplatte (9) und der Gegenanpreßplatte (21) ausgesetzt ist, wobei eines der Elemente Gegenanpreßplatte (21) - Deckel (8) eine insgesamt axial ausgerichtete ringförmige Einfassung (83, 283) aufweist, die die Druckplatte (9) umgibt, und wobei axial elastische und umfangsmäßig wirksame Zungen (5) die Druckplatte (9) drehfest mit dem Deckel (8) verbinden, wobei sie eine axiale Bewegung der Druckplatte (9) gegenüber dem Deckel (8) zulassen,
**dadurch gekennzeichnet,**
**daß** eine Verbindung (6) in der Ausführung mit Zapfen (66, 93) und Zapfenloch (67, 167, 267) mit Umfangsspiel und mit axialem Spiel zwischen der Einfassung (83, 283) und der Druckplatte (9) zum Einsatz kommt, daß das axiale Spiel so gewählt ist, daß eine axiale Verschiebung der Druckplatte (9) im Verhältnis zum Deckel (8) ermöglicht wird, während das Umfangsspiel so gewählt ist, daß es aufgehoben wird, wenn das Dämpfungsschwungrad seine Resonanzfrequenz durchläuft, so daß die besagte Verbindung dann an die Stelle der Verbindung der elastischen Zungen tritt, um die Druckplatte drehfest mit dem Deckel zu verbinden.

2. Kupplung nach Anspruch 1, **dadurch gekennzeichnet, daß** die besagte Verbindung (6) mehrere Gruppen von Zapfen (66, 93) (66) und Zapfenlöchern (67, 167, 267) umfaßt.

3. Kupplung nach Anspruch 2, **dadurch gekennzeichnet, daß** mehrere Gruppen von elastischen Zungen (5) vorgesehen sind und daß sich die Gruppen von Zapfen (66) und Zapfenlöchern (67, 167) umfangsmäßig mit den Gruppen von elastischen Zungen (5) abwechseln.

4. Kupplung nach Anspruch 1 bis 3, **dadurch gekennzeichnet, daß** die Zapfen (66, 93) von der Druckplatte (9) ausgehen.

5. Kupplung nach Anspruch 4, **dadurch gekennzeichnet, daß** sich die Zapfen (66, 93) radial vorstehend am äußeren Umfang der Druckplatte (9) erstrecken.

6. Kupplung nach Anspruch 5, **dadurch gekennzeichnet, daß** die Zapfen (66, 93) im Schnitt eine insgesamt rechteckige Form aufweisen.

7. Kupplung nach Anspruch 5, **dadurch gekennzeichnet, daß** die Zapfenlöcher (62) in der Einfassung (83) des Deckels (8) ausgebildet sind.

8. Kupplung nach Anspruch 7, **dadurch gekennzeichnet, daß** die Zapfenlöcher eine insgesamt rechteckige Form aufweisen.

9. Kupplung nach Anspruch 5, **dadurch gekennzeichnet, daß** die Zapfenlöcher in der Einfassung (283) der Gegenanpreßplatte (21) ausgebildet sind.

10. Kupplung nach Anspruch 5, **dadurch gekennzeichnet, daß** die Zapfenlöcher in axialer Übereinstimmung in der Einfassung (283) der Gegenanpreßplatte (21) und in der Einfassung (83) des Deckels (8) ausgebildet sind.

## Claims

1. A friction clutch for a motor vehicle with an internal combustion engine that includes a damping flywheel excited by the engine of the vehicle, having a resonant frequency at speeds below the slow-running range, and comprising a reaction plate (21) and at least one friction disc (3) having friction liners (31) at its outer periphery, together with a clutch mechanism comprising, firstly, a cover plate (8) for fastening the clutch mechanism on the damping flywheel, and secondly, a pressure plate (9) acted on by resilient gripping means (7) whereby to grip the friction liners (31) between the pressure plate (9) and reaction plate (21), wherein one of the elements consisting of the reaction plate (21) and cover plate (8) has a generally axially oriented annular skirt (8, 283) surrounding the pressure plate (9), and wherein circumferentially acting and axially resilient tongues couple the pressure plate (9) in rotation to the cover plate (8) while permitting axial movement of the pressure plate (9) with respect to the cover plate (8), **characterised in that** a coupling (6), of the type comprising a tenon (66, 93) and mortice (67, 167, 267) is operatively interposed, with a circumferential clearance and an axial clearance, between the skirt (83, 283) and the pressure plate (9), and **in that** the axial clearance is so chosen that it enables the pressure plate (9) to undergo axial displacement with respect to the cover plate (8), while the circumferential clearance is so chosen as to be eliminated when the damping flywheel is passing through its resonant frequency, whereby the said coupling is at that time substituted for that provided by the resilient tongues to couple the pressure plate in rotation to the cover plate.

2. A clutch according to Claim 1, **characterised in that** the said coupling (6) includes a plurality of sets of tenons (66, 93) (66) *[sic]* and mortices (67, 167, 267).

3. A clutch according to Claim 2, **characterised in that** a plurality of sets of resilient tongues (5) are provided, and **in that** the sets of tenons (66) and mortices (67, 167) are disposed in circumferential alternation with the sets of resilient tongues (5).

4. A clutch according to Claims 1 to 3, **characterised in that** the tenons (66, 93) project from the pressure plate (9).

5. A clutch according to Claim 4, **characterised in that** the tenons (66, 93) project radially from the outer periphery of the pressure plate (9).

6. A clutch according to Claim 5, **characterised in that** the tenons (66, 93) are of generally rectangular cross section.

7. A clutch according to Claim 5, **characterised in that** the mortices (62) are formed in the skirt (83) of the cover place (8).

8. A clutch according to Claim 7, **characterised in that** the mortices are of generally rectangular form.

9. A clutch according to Claim 5, **characterised in that** the mortices are formed in the skirt (283) of the reaction plate (21).

10. A clutch according to Claim 5, **characterised in that** the mortices are formed in axial coincidence in the skirt (283) of the reaction plate (21) and in the skirt (83) of the cover plate (8).
